# EUROPÄISCHE PATENTANMELDUNG

(11) **EP 1 495 941 A1**
(43) Veröffentlichungstag der Anmeldung: **12.01.2005**
(21) Anmeldenummer: 04015847.9
(22) Anmeldetag: 06.07.2004
(51) Int. Cl.: B62D 1/28

(54) **Vorrichtung zur spurhaltungsgeregelten Lenkung**

(30) Priorität: 10.07.2003 DE 10331232
(71) Anmelder: ZF Lenksysteme GmbH, 73527 Schwäbisch Gmünd (DE)
(72) Erfinder: Leutner, Wilfried, 73527 Schwäbisch Gmünd (DE)

(57) **Zusammenfassung**

Die Erfindung betrifft eine Vorrichtung (1) zur spurhaltungsgeregelten Lenkung eines Fahrzeugs, mit einem Spurführungsregler (2) zur Ermittlung einer Kursabweichung des Fahrzeugs und zur Bereitstellung eines reglerangeforderten Lenkhilfe-Stellsignals Iᵣ, an einen Servomotor (3). Das reglerangeforderte Lenkhilfe-Stellsignal Iᵣ wird dem fahrerangeforderten Lenkhilfe-Stellsignal I_{f} überlagert, indem eine Lenkkennlinie (4) verschoben wird.

## Beschreibung

Die Erfindung betrifft eine Vorrichtung zur spurhaltungsgeregelten Lenkung eines Fahrzeugs nach dem Oberbegriff des Anspruchs 1.

Es sind Vorrichtungen zur spurhaltungsgeregelten Lenkung von Fahrzeugen bekannt, bei denen ein Fahrer zwischen manuellem und automatischem Lenkbetrieb umschalten kann, wobei der Fahrer überwiegend manuell lenkt, während bei automatischem Betrieb durch die Vorrichtung der Lenkwinkel oder das Lenkmoment allein, ohne Eingriffsmöglichkeiten des Fahrers, vorgegeben wird.

Die DE 43 32 836 C1 beschreibt eine Vorrichtung zur spurhaltungsgeregelten Lenkung eines Fahrzeugs, mit einem Spurführungsregler zur optischen Ermittlung einer Kursabweichung eines Fahrzeugs, wobei ein reglerangefordertes Lenkhilfe-Stellsignal an einen Servomotor und dessen Steuereinrichtung bereitgestellt wird. Das reglerangeforderte Lenkhilfe-Stellsignal wird vor dem Servomotor einem fahrerangeforderten Lenkhilfe-Stellsignal überlagert. Das reglerangeforderte Lenkhilfe-Stellsignal wird begrenzt, so dass der Fahrer des Fahrzeugs die Kontrolle über größere Änderungen des Lenkwinkels, wie etwa zur Durchführung von Ausweichmanövern oder Fahrspurwechsel selbst behält. Geringfügige Änderungen des Lenkwinkels zur Einhaltung eines vorgegebenen Sollwertes der Fahrzeuglage werden von der Vorrichtung zur spurhaltungsgeregelten Lenkung durchgeführt. Die Größe des reglerangeforderten Lenkhilfe-Stellsignals ist begrenzt, so dass vergleichsweise kleine Lenkbewegungen von der Vorrichtung zur spurhaltungsgeregelten Lenkung ausgeführt werden.

Der Erfindung liegt die Aufgabe zugrunde, eine Vorrichtung zur spurhaltungsgeregelten Lenkung eines Fahrzeugs zu schaffen, mit Hilfe derer das Fahrzeug über den gesamten Lenkwinkelbereich bei stetiger Überstimmmöglichkeit durch den Fahrer gelenkt werden kann.

Die Aufgabe wird mit einer Vorrichtung zur spurhaltungsgeregelten Lenkung eines Fahrzeugs mit den Merkmalen des Anspruchs 1 gelöst.

Die Vorrichtung zur spurhaltungsgeregelten Lenkung weist einen Spurführungsregler auf, welcher im wesentlichen in Abhängigkeit von der Kursabweichung des Fahrzeugs eine Stellgröße - ein reglerangefordertes Lenkhilfe-Stellsignal - ermittelt. Ein Lenkmomentsensor, welcher das vom Fahrer des Fahrzeugs erzeugte Lenkmoment misst, stellt ein fahrerangefordertes Lenkhilfe-Stellsignal bereit. Der Spurführungsregler addiert oder überlagert nach vorgegebenen Algorithmen das reglerangeforderte und das fahrerangeforderte Lenkhilfe-Stellsignal, wobei eine Lenkkennlinie, die bevorzugt die Abhängigkeit des Servomotormoments eines Servomotors der Lenkung von dem Lenkmoment beschreibt, verschoben wird. Die Stellgröße des Spurführungsreglers wird entweder durch Überlagerung des reglerangeforderten Lenkhilfe-Stellsignals mit dem gemessenen Lenkmoment oder durch Überlagerung des reglerangeforderten Lenkhilfe-Stellsignals mit dem über die Lenkkennlinie ermittelten Servomotormoment ermittelt.

Auf diese Weise ist stets ermöglicht, dass der Fahrer des Fahrzeugs über eine Lenkkennlinie den gesamten Lenkwinkelbereich des Fahrzeugs durch manuelles Lenken ausschöpfen kann, wobei gleichzeitig von dem Spurführungsregler über die Lenkkennlinie durch Überlagerung des reglerangeforderten Lenkhilfe-Stellsignals das Fahrzeug stets automatisch geführt werden kann.

Bevorzugte Ausführungen der Erfindung ergeben sich aus den Unteransprüchen.

Es ist zweckmäßig, das reglerangeforderte Lenkhilfe-Stellsignal auf das dem größten Lenkmoment oder Servomotormoment entsprechende fahrerangeforderte Lenkhilfe-Stellsignal zu begrenzen. Das sich dadurch einstellende maximale Lenkmoment wird dann bei automatischer Spurführung maximal doppelt so groß, wie bei ausschließlich manueller Führung des Fahrzeugs. Ist diese Begrenzung des reglerangeforderten Lenkhilfe-Stellsignals unkomfortabel oder wird dadurch ein Messbereich eines Lenkmomentsensors der Lenkung des Fahrzeugs überschritten, so kann die Lenkkennlinie mit zunehmendem reglerangeforderten Lenkhilfe-Stellsignal eingeengt werden, wobei deren Steigung vergrößert wird. Dadurch tritt eine Änderung der Lenkungscharakteristik ein die akzeptabel ist.

Der Servomotor der Lenkung kann sowohl auf die Lenkwelle als auch direkt auf ein Lenkgetriebe des Fahrzeugs wirken. Der Servomotor kann ein Elektromotor einer elektrischen Servolenkung, einer steer-by-wire-Lenkung oder auch ein hydrostatischer Servomotor, etwa einer elektrohydraulischen Servolenkung sein.

Die Erfindung wird nun näher anhand von zwei Ausführungsbeispielen und anhand der beiliegenden Zeichnungen, die folgende schematische Darstellungen wiedergeben, beschrieben:
- Fig. 1: zeigt eine schematische Darstellung einer spurhaltungsgeregelten Servolenkung mit einer Addierung des reglerangeforderten Lenkhilfe-Stellsignals auf das Lenkmoment,
- Fig. 2: zeigt eine Schar nichtlinearer Lenkkennlinien der Lenkung unter Einfluss des reglerangeforderten Lenkhilfe-Stellsignals auf das Lenkmoment,
- Fig. 3: zeigt Lenkkennlinien in Fig. 2 mit unter Einfluss des Spurführungsreglers erhöhter Steigung,
- Fig. 4: zeigt eine schematische Darstellung einer spurhaltungsgeregelten Lenkung mit einer Addierung des reglerangeforderten Lenkhilfe-Stellsignals auf das Servomotormoment,
- Fig. 5: zeigt eine Schar nichtlinearer Lenkkennlinien der Lenkung unter Einfluss des reglerangeforderten Lenkhilfe-Stellsignals auf das Servomotormoment,
- Fig. 6: zeigt Lenkkennlinien wie in Fig. 5 mit unter Einfluss des Spurführungsreglers erhöhter Steigung.

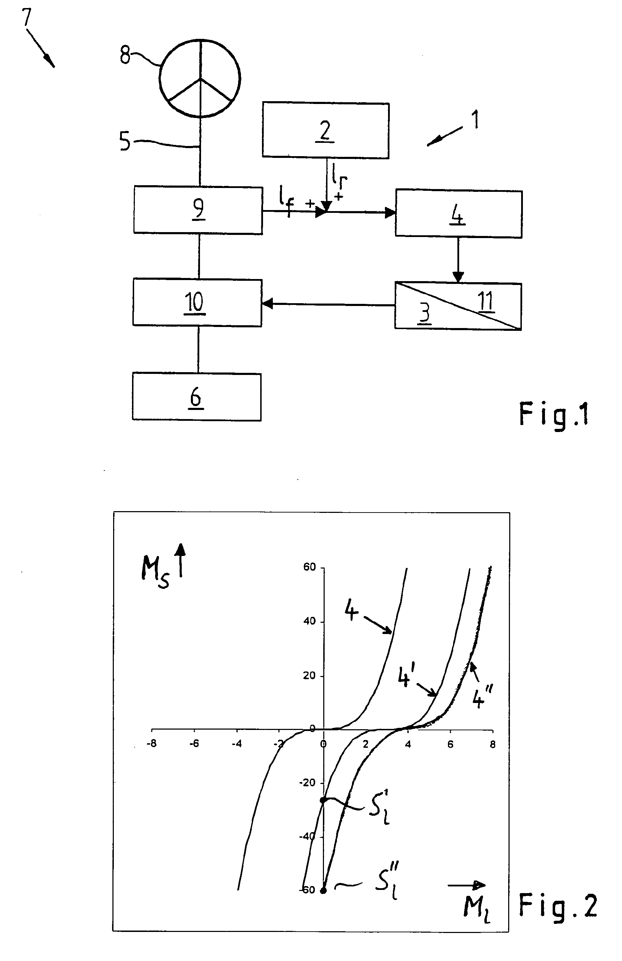

In der Fig. 1 ist eine elektrische Servolenkung 7 mit einer Vorrichtung 1 zur spurhaltungsgeregelten Lenkung eines Fahrzeugs schematisch dargestellt. Eine Lenkhandhabe 8 ist an einer Lenkwelle 5 festgelegt und über ein Lenkgetriebe 6 mit ein oder mehreren lenkbaren Rädern eines Fahrzeugs verbunden. Das Lenkgetriebe 6 kann in bekannter Weise aus einem drehfest mit der Lenkwelle 5 verbundenen Ritzel gebildet sein, welche mit einer Zahnstange oder einer Spindel kämmt. Die Zahnstange verstellt den Lenkwinkel der lenkbaren Räder über eine Spurstange und einen Radlenkhebel.

An der Lenkwelle 5 ist ein Lenkmomentsensor 9 angeordnet, der ein vom Fahrer des Fahrzeugs auf die Lenkhandhabe 8 aufgebrachtes Lenkmoment M_{I} misst. Ein elektrischer Servomotor 3 dient zur Bereitstellung eines Servomotormoments Mₛ auf ein zwischen der Lenkhandhabe 8 und dem Lenkgetriebe 6 an der Lenkwelle 5 angeordnetes Getriebe 10.

Ein Spurführungsregler 2 berechnet eine Sollrichtung des Fahrzeugs und gibt ein reglerangefordertes Lenkhilfe-Stellsignal Iᵣ aus, das mit einem aus dem gemessenen Lenkmoment Mₗ ermittelten, fahrangeforderten Lenkhilfe-Stellsignal I_{f} des Lenkmomentsensors 9 mathematisch verknüpft, wie etwa addiert wird. Der Spurführungsregler 2 errechnet eine Momentvorgabe für den Servomotor 3. Eine Steuer- und / oder Regelungseinrichtung 11 des Servomotors 3 misst dem Servomotor 3 eine Steuerspannung zu.

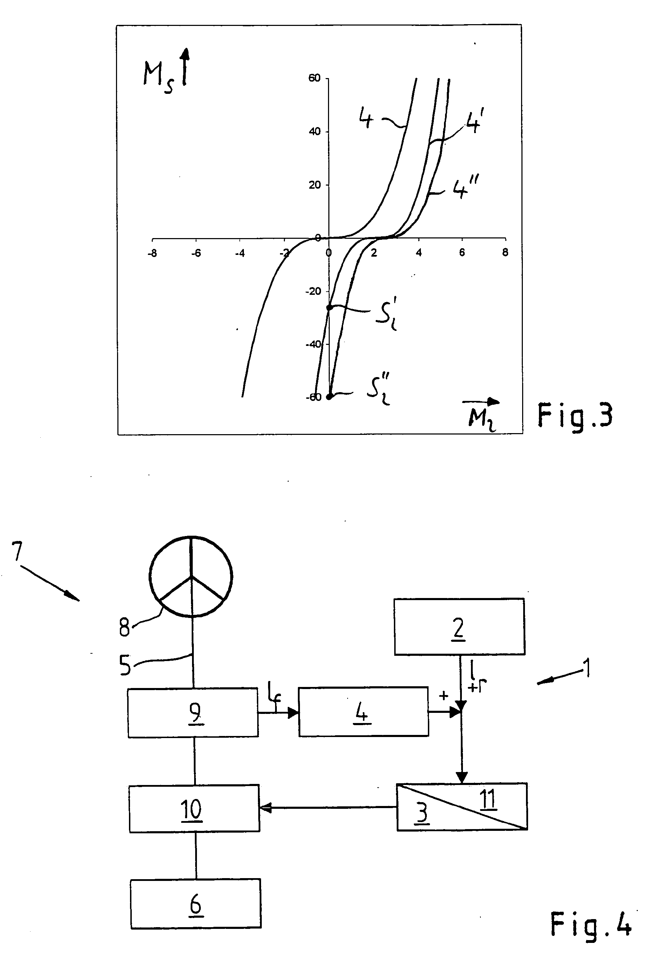

Bei der Ermittlung der Momentvergabe des Spurführungsreglers 2 wird das reglerangeforderte Lenkhilfe-Stellsignal Iᵣ mit dem fahrerangeforderten Lenkhilfe-Stellsignal I_{f}, welches durch eine Lenkkennlinie 4 festgelegt ist, durch Verschieben der Lenkkennlinie 4 verknüpft. Die Lenkkennlinie 4 ist, wie Fig. 2 zeigt, nicht linear und legt eine Abhängigkeit des Servomotormoments Mₛ von dem Lenkmoment Mₗ fest. Durch den Spurführungsregler 2 wird, wie die Figuren 2 und 3 zeigen, die Lenkkennlinie 4 durch Addieren des reglerangeforderten Lenkhilfe-Stellsignals Iᵣ auf das gemessene Lenkmoment Mₗ beispielsweise so verschoben, dass sich die Lenkkennlinien-Schar 4ₗ', 4ₗ'' ergibt.

Entsprechend den sich ergebenden Schnittpunkten Sₗ', Sₗ" der Lenkkennlinien 4ₗ', 4ₗ" mit der y-Achse in Fig. 2 und 3 ergeben sich Soll-Servomotormomente, die eine Lenkbewegung der Servolenkung 7 in die gewünschte Kursrichtung bewirken.

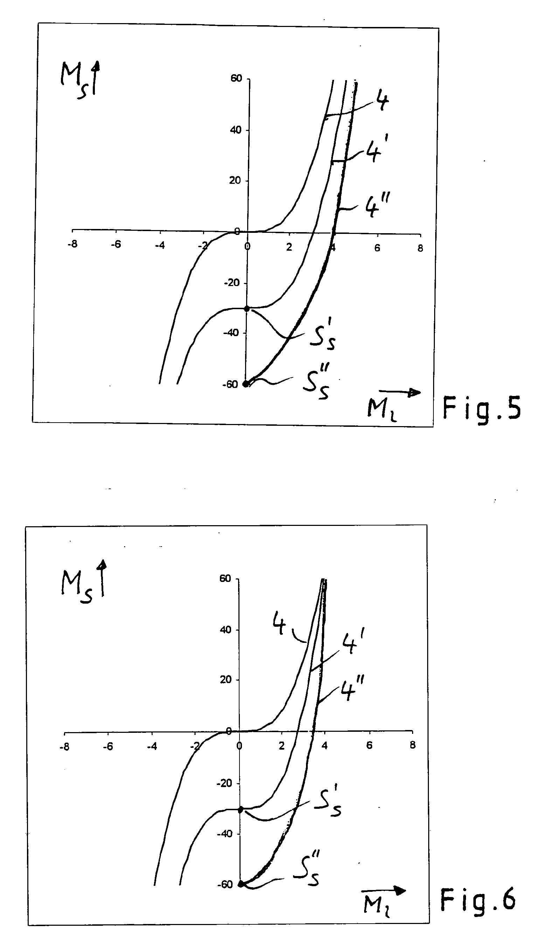

Das reglerangeforderte Lenkhilfe-Stellsignal Iᵣ kann anstatt mit dem Lenkmoment Mₗ mit dem Servomoment Mₛ verknüpft werden, wodurch sich eine Verschiebung der Lenkkennlinie 4 in Richtung der Servomotormoment-Richtung in den Figuren 5 und 6 hin zu der Lenkkennlinien-Schar 4ₛ', 4ₛ" ergibt. Es ergeben sich entsprechende Schnittpunkte Sₛ', Sₛ" der Lenkkennlinien-Schar 4', 4" mit der y-Achse.

Der Fahrer hat zum Zeitpunkt, in dem das Fahrzeug anhand der Kennlinien 4', 4" gelenkt wird, einen Eindruck von der Lenkung derart, dass die Spur der gelenkten Räder verstellt ist.

Um das sich einstellende maximale Lenkmoment M_{l max} während des Spurführungsbetriebs der Lenkung vom Fahrer beherrschbar zu halten, wird das reglerangeforderte Lenkhilfe-Stellsignal Iᵣ etwa auf das größte fahrerangeforderte Lenkhilfe-Stellsignal I_{f max} oder auf einen Wert begrenzt, der etwa dem größten Servomotormoment M_{s max} entspricht.

Wie die Lenkkennlinien 4', 4" in den Figuren 3 und 6 zeigen, kann das maximale Lenkmoment durch eine Vergrößerung der Steigung der nichtlinearen Lenkkennlinie 4 mit zunehmendem reglerangeforderten Lenkhilfe-Stellsignal Iᵣ begrenzt werden. Die Lenkkennlinien 4', 4" sind in Richtung der Servomotormoment-Achse (y-Achse) in den Figuren 3 und 6 gestaucht. Durch diese konstruktive Maßnahme lassen sich auch Lenkmomentsensoren mit verringertem Messbereich in einer erfindungsgemäßen Lenkung einsetzen.

### BEZUGSZEICHENLISTE

| | | | |
|---|---|---|---|
| 1 | Vorrichtung zur spurhaltungsgeregelten Lenkung | 26 | |
| 2 | Spurführungsregler | 27 | |
| 3 | Servomotor | 28 | |
| 4,4',4" | Lenkkennlinie | 29 | |
| 5 | Lenkwelle | 30 | |
| 6 | Lenkgetriebe | 31 | |
| 7 | Servolenkung, elektrisch | 32 | |
| 8 | Lenkhandhabe | 33 | |
| 9 | Lenkmomentsensor | 34 | |
| 10 | Getriebe | 35 | |
| 11 | Steuer-Regeleinrichtung | 36 | |
| 12 | | 37 | |
| 13 | | 38 | |
| 14 | | 39 | |
| 15 | | 40 | |
| 16 | | 41 | |
| 17 | | 42 | |
| 18 | | 43 | |
| 19 | | 44 | |
| 20 | | 45 | |
| 21 | | 46 | |
| 22 | | 47 | |
| 23 | | 48 | |
| 24 | | 49 | |
| 25 | | 50 | |
| Iᵣ | reglerangefordertes Lenkhilfe-Stellsignal | S',S" | Schnittpunkt |
| I_{f} | fahrerangefordertes LenkhilfeERR-Stellsignal | | |
| | | | |
| Mₗ | Lenkmoment | | |
| Mₛ | Servomotormoment | | |

## Patentansprüche

1. Vorrichtung zur spurhaltungsgeregelten Lenkung eines Fahrzeugs, mit einem Spurführungsregler (2) zur Ermittlung einer Kursabweichung eines Fahrzeugs und zur Bereitstellung eines reglerangeforderten Lenkhilfe-Stellsignals (Iᵣ) an einen Servomotor (3), wobei dem reglerangeforderten Lenkhilfe-Stellsignal (Iᵣ) ein fahrerangefordertes Lenkhilfe-Stellsignal (I_{f}) überlagert ist, **dadurch gekennzeichnet, dass** die Überlagerung des reglerangeforderten Lenkhilfe-Stellsignals (Iᵣ) und des fahrerangeforderten Lenkhilfe-Stellsignals (I_{f}) durch Verschieben einer Lenkkennlinie (4) erfolgt.

2. Vorrichtung nach Anspruch 1, **dadurch gekennzeichnet, dass** die Lenkkennlinie (4) eine Lenkmoment-Servomoment-Kennlinie ist, wobei das reglerangeforderte Lenkhilfe-Stellsignal (Iᵣ) mit dem Lenkmoment (Mₗ) verknüpft ist.

3. Vorrichtung nach Anspruch 1, **dadurch gekennzeichnet, dass** die Lenkkennlinie (4) eine Lenkmoment-Servomoment-Kennlinie ist, wobei das reglerangeforderte Lenkhilfe-Stellsignal (Iᵣ) mit dem Servomotormoment (Mₛ) verknüpft ist.

4. Vorrichtung nach einem der Ansprüche 1 bis 3, **dadurch gekennzeichnet, dass** das reglerangeforderte Lenkhilfe-Stellsignal (Iᵣ) etwa auf das größte fahrerangeforderte Lenkhilfe-Stellsignal (I_{f max}) begrenzt ist.

5. Vorrichtung nach einem der Ansprüche 1 bis 4, **dadurch gekennzeichnet, dass** das reglerangeforderte Lenkhilfe-Stellsignal (Iᵣ) auf einen Wert, der etwa dem größten Servomotormoment (M_{s max}) entspricht, begrenzt ist.

6. Vorrichtung nach einem der Ansprüche 1 bis 5, **dadurch gekennzeichnet, dass** die Steigung der Lenkkennlinie (4) mit größer werdendem reglerangeforderten Lenkhilfe-Stellsignal (Iᵣ) vergrößert wird.

7. Vorrichtung nach einem der Ansprüche 1 bis 6, **dadurch gekennzeichnet, dass** der Servomotor (3) auf eine Lenkwelle (5) wirkt.

8. Vorrichtung nach einem der Ansprüche 1 bis 7, **dadurch gekennzeichnet, dass** der Servomotor (3) auf ein Lenkgetriebe (6) wirkt.

9. Vorrichtung nach einem der Ansprüche 1 bis 8, **dadurch gekennzeichnet, dass** die Vorrichtung (1) Teil einer elektrischen Servolenkung (7) ist.

10. Vorrichtung nach einem der Ansprüche 1 bis 8, **dadurch gekennzeichnet, dass** die Vorrichtung (1) Teil einer elektrohydraulischen Servolenkung ist.
